# EUROPEAN PATENT APPLICATION

(11) **EP 2 207 071 A1**
(43) Date of publication of application: **14.07.2010**
(21) Application number: 09015728.0
(22) Date of filing: 18.12.2009
(51) Int. Cl.: G05B 19/418

(54) **Production operation management system**

(30) Priority: 09.01.2009 JP 2009003159
(71) Applicant: Yokogawa Electric Corporation, Musashino-shi Tokyo 180-8750 (JP)
(72) Inventor: Ishikawa, Makio, Musashino-shi Tokyo 180-8750 (JP)
(74) Representative: Goddar, Heinz J.

(57) **Abstract**

There is provided a production operation management system (1) capable of executing efficient management of production operation by enabling exchange of information with a distributed control system (2). The production operation management system comprises registration-acceptance means for accepting registration of jobs necessary for the production operation, progress-state acceptance means for accepting an input of a progress-state of each of the jobs, the registration thereof being accepted by the registration-acceptance means, progress-state storage means for storing a progress-state of each of the jobs, inputted by the progress-state acceptance means, presentation-request acceptance means for accepting a presentation-request for a progress-state of each of the jobs, stored by the progress-state storage means, progress-state presentation means for presenting the progress-state of each of the jobs, stored by the progress-state storage means, according to the presentation-request accepted by the presentation-request acceptance means, and information processing means for executing exchange of information with a distributed control system (2) for controlling respective sections of the plant (21) according to the progress-state.

## Description

### FIELD OF THE INVENTION

The present invention relates to a production operation management system for managing production operation at a plant.

### BACKGROUND OF THE INVENTION

In the case of managing production operation at a plant, management has thus far been executed through the following work steps as instructed in writing, orally, or by use of a white board, and so forth:
- creation of a job order from a production plan, and management thereof
- work fragmentation on the basis of the production plan (each of fragmented works is hereinafter referred to as a job)
- job's request to a job-worker
- collection of information necessary for a job
- job execution
- monitoring of a state of a job underway
- notification on job completion
- management of job logs
- creation of information for the handover process
   [Patent Document 1] JP 2007 - 115178 A

However, because software for use in carrying out those jobs is provided on a function-by- function basis, a job-worker moves to a computer in which software for running a function meeting the needs is installed before executing a necessary operation. Thus, in a stream of a series of jobs such as the production plan, operation, collection of logs, and analysis, a human being is, in effect, responsible for the role of taking over main functions, so that there exists a problem in that a human error tends to occur, and efficient management will be difficult to implement.

Further, respective jobs based on the production plan will eventually be converted into work, that is, plant operation via a distributed control system. However, with a conventional system, the production plan is not operatively connected to the distributed control system, and therefore, personal transfer of information is required for checking an operation state of a plant, or for an operation against the distributed control system, and so forth.

### SUMMARY OF THE INVENTION

It is therefore an object of the invention to provide a production operation management system capable of executing efficient management of production operation by enabling exchange of information with a distributed control system.

A production operation management system according to the invention is a production operation management system for managing production operation at a plant, said system comprising registration-acceptance means for accepting registration of jobs necessary for the production operation, progress-state acceptance means for accepting an input of a progress-state of each of the jobs, the registration thereof being accepted by the registration-acceptance means, progress-state storage means for storing a progress-state of each of the jobs, inputted by the progress-state acceptance means, presentation-request acceptance means for accepting a presentation-request for a progress-state of each of the jobs, stored by the progress-state storage means, progress-state presentation means for presenting the progress-state of each of the jobs, stored by the progress-state storage means, according to the presentation-request accepted by the presentation-request acceptance means, and information processing means for executing exchange of information with a distributed control system for controlling respective sections of the plant according to the progress-state.

With the production operation management system described, since the exchange of information with the distributed control system for controlling the respective sections of the plant is executed according to the progress-state, efficient management of the production operation can be implemented.

The information processing means may acquire information held by the distributed control system so as to be displayed.

The information processing means may write data to the distributed control system.

The information processing means may cause results of the exchange of information with the distributed control system to be reflected on the progress-state.

The production operation management system may further comprise screen-call means for issuing a call to a screen that is used in the distributed control system, and accepting an operation to the distributed control system, necessary for the jobs, via the screen.

With the production operation management system described, since the exchange of information with the distributed control system for controlling the respective sections of the plant is executed according to the progress-state, efficient management of the production operation can be implemented.

### BRIEF DESCRIPTION OF THE DRAWINGS

Fig. 1 is a view showing one embodiment of a production operation management system according to the invention, in which Fig. 1 (A) is a block diagram showing a configuration of the production operation management system, and Fig. 1 (B) is a view showing a data file group stored in a work management database;
Fig. 2 is a flow chart showing actions of the production operation management system;
Fig. 3 is another flow chart showing actions of the production operation management system;
Fig. 4 is still another flow chart showing actions of the production operation management system;
Fig. 5 is still another flow chart showing actions of the production operation management system;
Fig. 6 is a further flow chart showing actions of the production operation management system; and
Fig. 7 is a still further flow chart showing actions of the production operation management system.

### DETAILED DESCRIPTION OF THE PREFERRED EMBODIMENTS

One embodiment of a production operation management system according to the invention is described hereinafter.

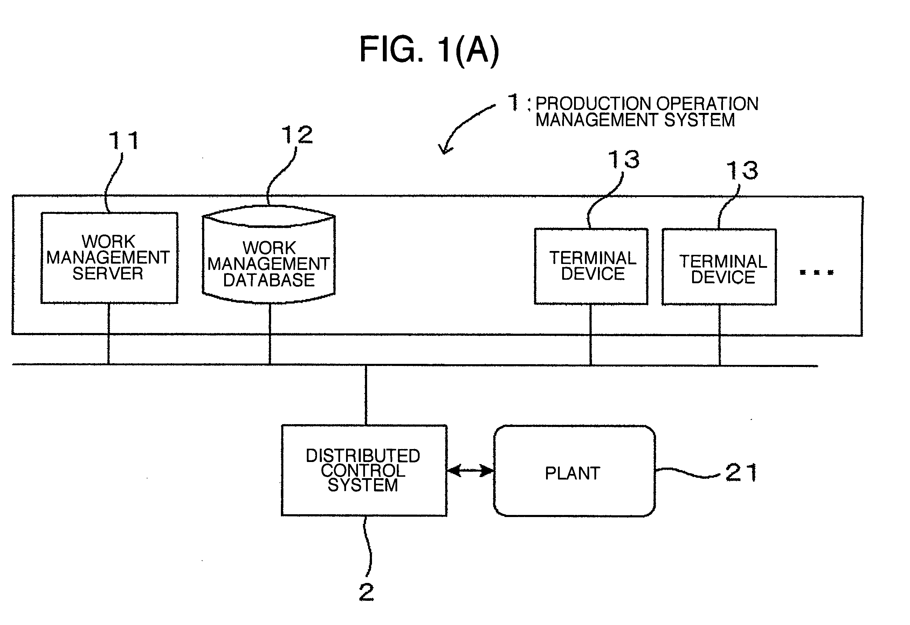

Fig. 1 (A) is a block diagram showing a configuration of a production operation management system according to the present embodiment.

As shown in Fig. 1 (A), a production operation management system 1 according to the present embodiment comprises a work management server 11 for executing processing for management of a production operation at a plant 21, a work management database 12 for storing data necessary for management of production operations, and terminal devices 13, 13, ..., for the management of the production operations.

Further, a distributed control system 2 for controlling respective sections of the plant 21 is connected to the production operation management system 1.

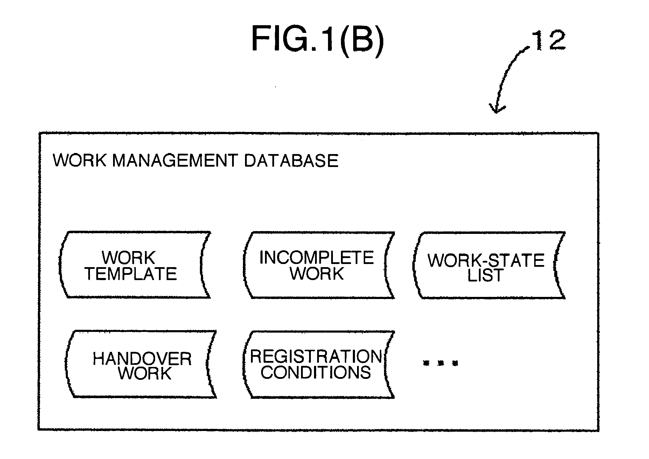

Fig. 1 (B) shows a data file group stored in the work management database 12. As shown in Fig. 1 (B), data files, such as work template, incomplete work, work-state list, handover work, registration conditions, and so forth, are stored in the work management database 12.

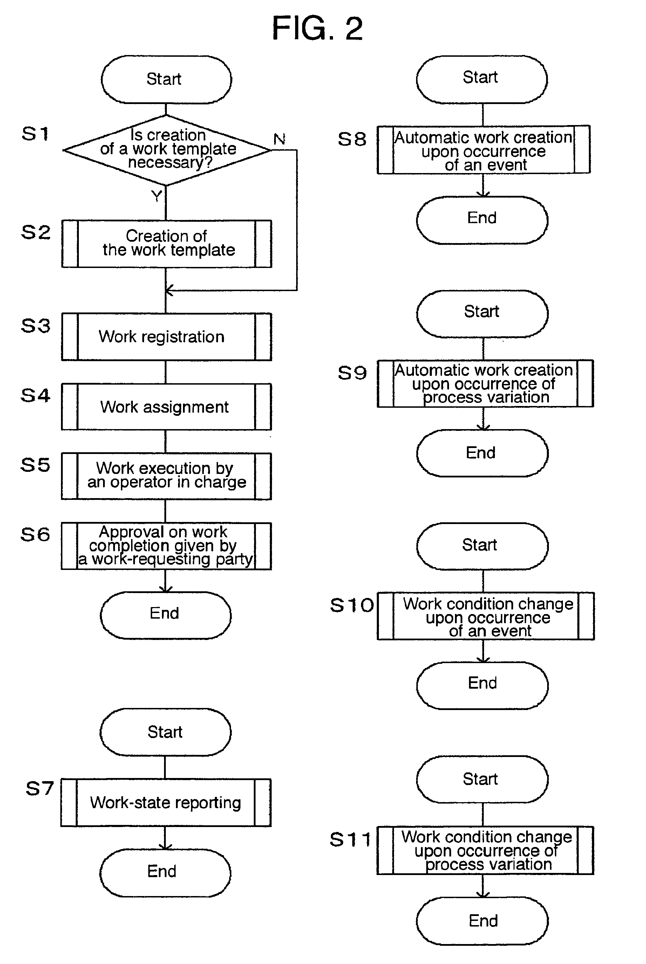

In Fig. 2, steps S1 to S11 make up a flow chart showing a stream of jobs constituting work. Processing in those steps is executed under control of the work management server 11.

In the step S1, the system determines whether or not creation of the work template is necessary, and proceeds to the step S2 in the affirmative case while proceeding to the step S3 in the negative case.

In the step S2, the system executes the creation of the work template, thereby proceeding to the step S3. The processing for the creation of the work template will be described later in the present description.

In the step S3, the system executes the processing for work registration. The processing for the work registration will be described later in the present description.

Next, in the step S4, the system executes the processing for work assignment, thereby proceeding to the step S5. The processing for the work assignment will be described later in the present description.

In the step S5, the system executes the processing at the time of work execution by an operator in charge, thereby proceeding to the step S6. The processing at the time of work execution by the operator in charge will be described later in the present description.

In the step S6, the system executes the processing at the time of approval on work completion, given by a work-requesting party, thereby completing a series of the processing.

Meanwhile, the system executes the processing for work-state reporting in the step S7, the processing for automatic work creation upon occurrence of an event in the step S8, the processing for automatic work creation upon occurrence of process variation in the step S9, the processing for work condition change upon occurrence of an event in the step S10, and the processing for work condition change upon occurrence of process variation in the step S11, respectively.

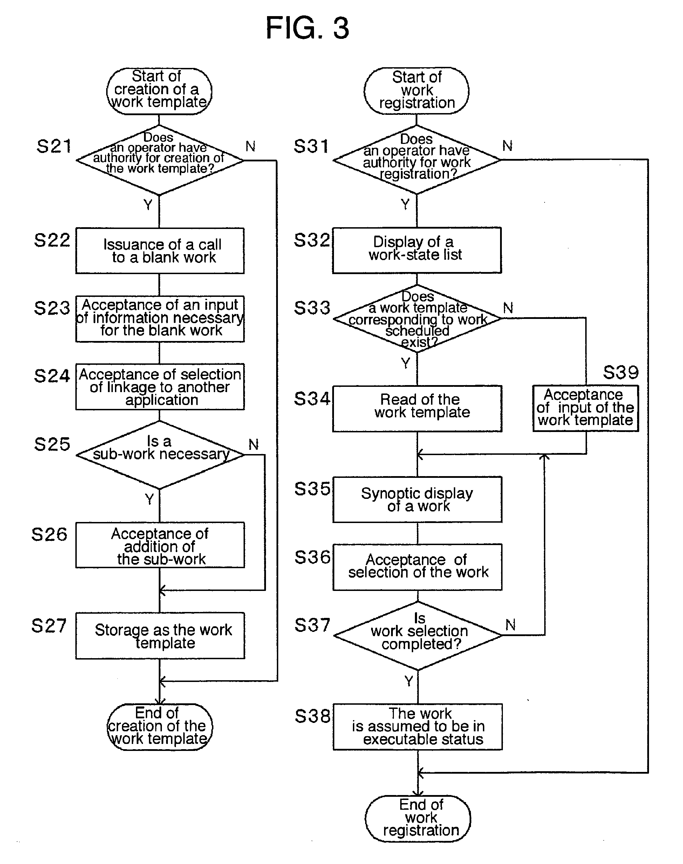

In Fig. 3, steps S21 to S27 make up a flow chart showing a procedure of the processing for the creation of the work template (the step S2).

In the step S21 of Fig. 3, the system executes authentication on an operator at the terminal device 13 to determine whether or not the operator has the authority for creation of a work template. In the affirmative case, the system proceeds to the step S22, completing the processing in the negative case.

In the step S22, the system issues a call to a blank work, accepting an input of necessary information from the operator at the terminal device 13 in the step S23. By so doing, necessary information is inputted to the blank work, to thereby create a work template.

Subsequently, in the step S24, the system accepts selection of linkage to another application by the operator at the terminal device 13. By so doing, an application linked to the work template is selected.

In the step S25, the system determines whether or not a sub-work to be associated with the work template exists. In the affirmative case, the system skips the step S26 to proceed to the step S27, proceeding to the step S26 otherwise.

In the step S26, the system accepts addition of a sub-work by the operator at the terminal device 13. In so doing, the sub-work is added to the work template.

In the step S27, the system adds the work template that has been completed in the steps S22 through S26 to a file in "work template" {Fig. 1 (B)} of the work management database 12, thereby completing the processing for the creation of the work template.

In Fig. 3, steps S31 to S39 make up a flow chart showing a procedure of the processing for the work registration (the step S3).

In the step S31 of Fig. 3, the system executes authentication on the operator at the terminal device 13 to determine whether or not the operator has authority for the work registration. In the affirmative case, the system proceeds to the step S32 while completing the processing in the negative case.

In the step S32, the system issues a call to a file in "work-state list" {Fig. 1 (B)} of the work management database 12 to be subsequently displayed at the terminal device 13.

In the step S33, the system determines whether or not there exists a work template corresponding to work scheduled to be performed, and proceeds to the step S34 in the affirmative case, proceeding to the step S39 in the negative case.

In the step S34, the system reads the file in "work template" {Fig. 1 (B)} of the work management database 12, acquiring a necessary work template before proceeding to the step S35.

Meanwhile, in the step S39, the system accepts an input of a work template, proceeding to the step S35. In the step S39, the system creates a work template according to an operation by the operator at the terminal device 13.

In the step S35, the system provides synoptic display of work corresponding to the work template acquired in the step 34, or the step 39.

Next, in the step S36, the system accepts selection of work among the works that have been synoptically displayed according to the operation by the operator at the terminal device 13.

In the step S37, the system determines whether or not work selection has been completed in response to the operation by the operator at the terminal device 13, and proceeds to the step S38 in the affirmative case, reverting to the step S35 in the negative case.

In the step S38, the system assumes that work is in an executable status, thereby completing the processing. In this case, the status is reflected in a file, and so forth, in "work-state list" {Fig. 1 (B)}.

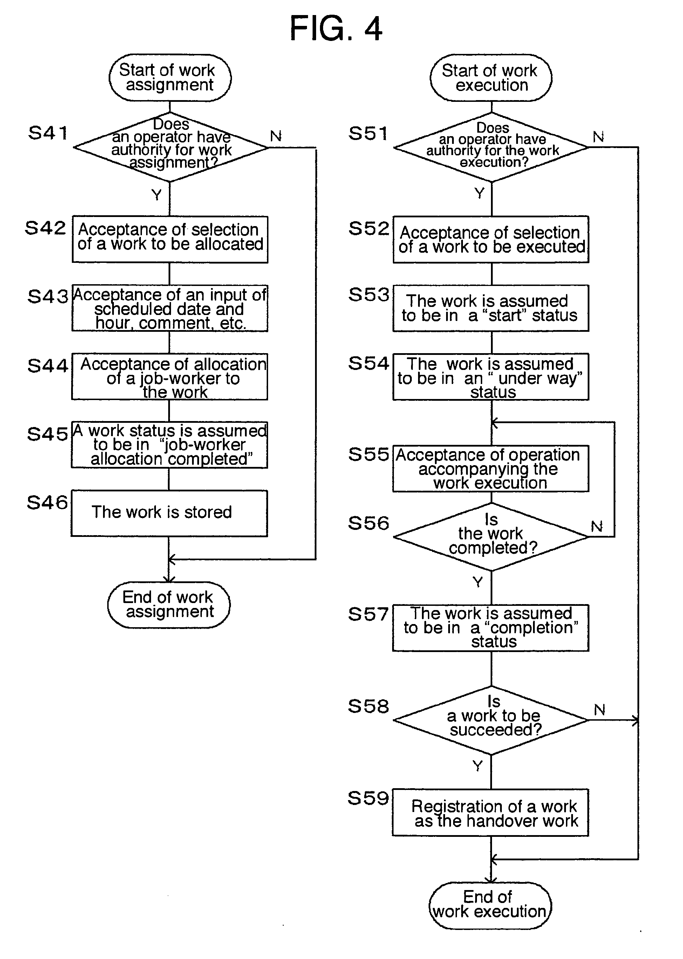

In Fig. 4, steps S41 to S46 make up a flow chart showing a procedure of the processing for the work assignment (the step S4).

In the step S41 of Fig. 4, the system executes authentication on the operator at the terminal device 13 to determine whether or not the operator has authority for the work assignment. In the affirmative case, the system proceeds to the step S42 while completing the processing in the negative case.

In the step S42, the system accepts selection of work to be allocated, according to the operation by the operator at the terminal device 13.

Next, in the step S43, the system accepts an input of scheduled date and hour, comment, and so forth, in connection with work as an allocation target, according to the operation by the operator at the terminal device 13.

Next, in the step S44, the system accepts allocation of a job-worker to the work as the allocation target, according to the operation by the operator at the terminal device 13.

Next, in the step S45, the system assumes that a work status is "job-worker allocation completed". In this case, the work status is reflected in files, and so forth, in "work-state list" {Fig. 1 (B)}.

Subsequently, in the step S46, the system stores the files, and so forth, in "work-state list" {Fig. 1 (B)}, thereby completing the processing.

In Fig. 4, steps S51 to S59 make up a flow chart showing a procedure of the processing at the time of the work execution (the step S5).

In the step S51 of Fig. 4, the system executes authentication on the operator at the terminal device 13 to determine whether or not the operator has authority for the work execution. In the affirmative case, the system proceeds to the step S52 while completing the processing in the negative case.

In the step S52, the system accepts selection of work to be executed, according to the operation by the operator at the terminal device 13.

Next, in the step S53, the system assumes that work is in a "start" status. Subsequently, in the step S54, the system assumes that the work is in an " under way" status, and this status is reflected in files, and so forth, in "work-state list" {Fig. 1 (B)}.

Next, in the step S55, the system accepts an operation at the terminal device 13 accompanying the work execution, and other operations, thereby proceeding to the step S56.

In the step S56, the system determines whether or not the work has been completed, and proceeds to the step S57 in the affirmative case, reverting to the step S55 in the negative case.

In the step S57, the system assumes that the work is in a "completion" status, and this status is reflected in files, and so forth, in "work-state list" {Fig. 1 (B)}.

Next, in the step S58, the system determines whether or not the work completed is to be succeeded, and proceeds to the step S59 in the affirmative case, completing the processing in the negative case.

In the step S59, the system accepts registration of a pertinent work as a handover work, according to the operation by the operator at the terminal device 13, thereby completing the processing.

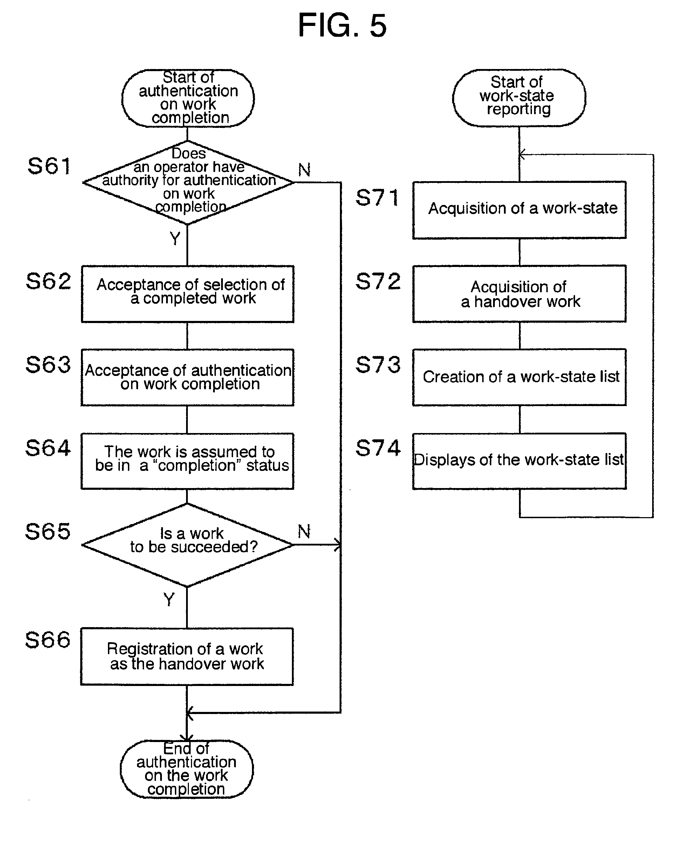

In Fig. 5, steps S61 to S66 make up a flow chart showing a procedure of the processing for authentication on the work completion (the step S6).

In the step S61 of Fig. 5, the system executes authentication on an operator at the terminal device 13 to determine whether or not the operator has the authority for authentication on the work completion. In the affirmative case, the system proceeds to the step S62, completing the processing in the negative case.

In the step S62, the system accepts selection of a completed work in response to the operation by the operator at the terminal device 13.

Next, in the step S63, the system accepts authentication on the work completion in response to the operation by the operator at the terminal device 13.

Next, in the step S64, the system assumes that the work is in a "completion" status, and this status is reflected in files, and so forth, in "work-state list" {Fig. 1 (B)}.

Next, in the step S65, the system determines whether or not a pertinent work is to be succeeded. In the affirmative case, the system proceeds to the step S65, completing the processing in the negative case.

In the step S66, the system accepts registration of the pertinent work as the handover work, thereby completing the processing.

In Fig. 5, steps S71 to S74 make up a flow chart showing a procedure of the processing for the work-state reporting (the step S7).

In the step S71 of Fig. 5, the system acquires a work-state.

Next, in the step S72, the system acquires a handover work if work has the handover work.

Next, in the step S73, the system creates a work-state list. Subsequently, in the step S74, the system displays the work-state list at the terminal device 13, reverting to the step S71.

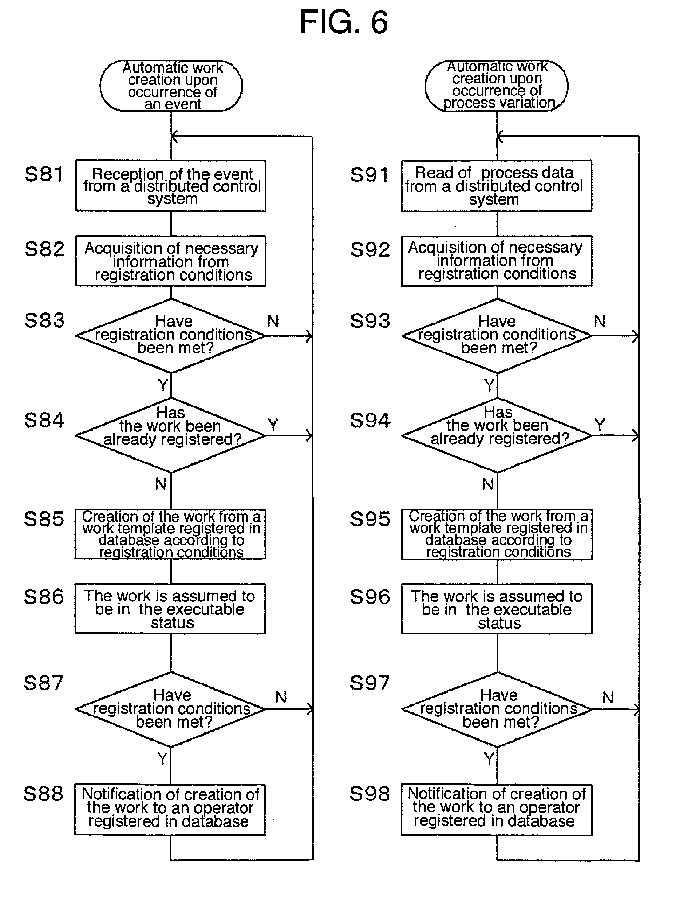

In Fig. 6, steps S81 to S88 make up a flow chart showing a procedure of the processing for the automatic work creation upon occurrence of an event (the step S8).

In the step S81 of Fig. 6, the system receives an event (an event such as, for example, alarm, and so forth) from the distributed control system 2, or other systems.

Next, in the step S82, the system reads a file in "registration conditions" {Fig. 1 (B)} in the work management database 12, acquiring necessary information.

Next, in the step S83, the system compares the event acquired in the step S81 with registration conditions acquired in the step S82, determining whether or not the contents of the event satisfies the registration conditions. In the affirmative case, the system proceeds to the step S84, reverting to the step S81 in the negative case.

In the step S84, the system determines whether or not a pertinent work has already been registered, reverting to the step 81 in the affirmative case while proceeding to the step S85 in the negative case.

In the step S85, the system creates work by use of a pertinent work template according to the contents of the file in "registration conditions".

In the step S86, the system assumes that a pertinent work is in the executable status. In this case, the status is reflected in files, and so forth, in "work-state list" {Fig. 1 (B)}.

In the step S87, the system determines whether or not the registration conditions acquired in the step S82 have been met, proceeding to the step S88 in the affirmative case while reverting to the step S81 in the negative case.

In the step S88, the system notifies the operator in charge, registered in the work management database 12, that the work has been created, reverting to the step S81.

In Fig. 6, steps S91 to S98 make up a flow chart showing a procedure of the processing for the automatic work creation upon occurrence of process variation (the step S9).

In the step S91 of Fig. 6, the system reads data from the distributed control system 2, or other systems.

Next, in the step S92, the system reads a file in "registration conditions" {Fig. 1 (B)} in the work management database 12, acquiring necessary information.

Then, in the step S93, the system compares process data acquired in the step S91 with registration conditions acquired in the step S92, determining whether or not the process data satisfies the registration conditions. In the affirmative case, the system proceeds to the step S94, reverting to the step S91 in the negative case.

In the step S94, the system determines whether or not a pertinent work has already been registered, reverting to the step S91 in the affirmative case while proceeding to the step S95 in the negative case.

In the step S95, the system creates work by use of a pertinent work template according to the contents of the file in "registration conditions".

In the step S96, the system assumes that a pertinent work is in the executable status. In this case, the status is reflected in the files, and so forth, in "work-state list" {Fig. 1 (B)}.

In the step S97, the system determines whether or not the registration conditions acquired in the step S92 have been met, and proceeds to the step S98 in the affirmative case while reverting to the step S91 in the negative case.

In the step S98, the system notifies the operator in charge, registered in the work management database 12, that the work has been created, thereby reverting to the step S91.

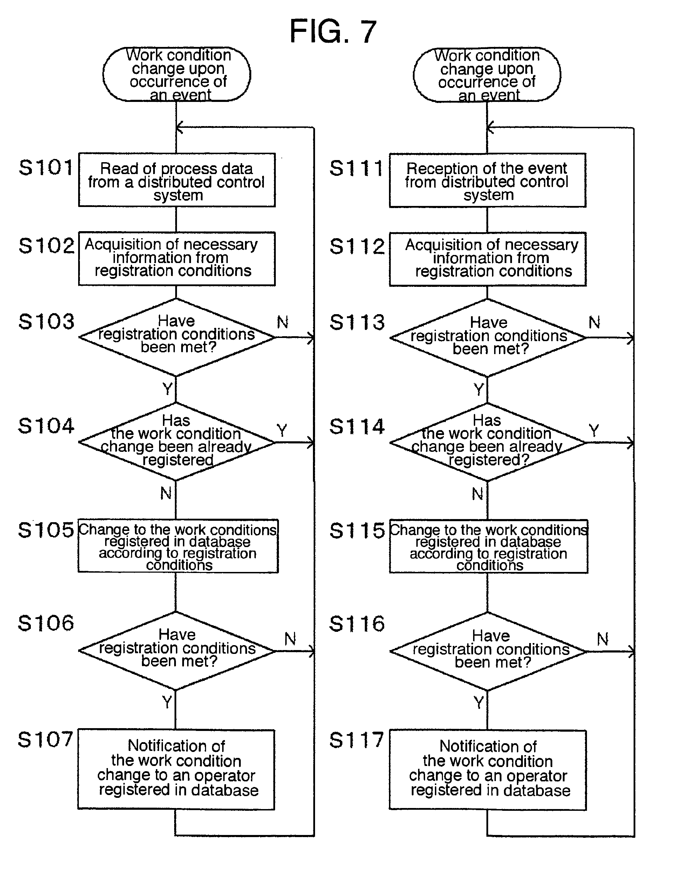

In Fig. 7, steps S101 to S107 make up a flow chart showing a procedure of the processing for the work condition change upon occurrence of an event (the step S10).

In the step S101 of Fig. 7, the system receives an event (an event such as, for example, alarm, and so forth) from the distributed control system 2, or other systems.

Next, in the step S102, the system reads a file in "registration conditions" {Fig. 1 (B)} in the work management database 12, thereby acquiring necessary information.

Next, in the step S103, the system compares the event acquired in the step S101 with registration conditions acquired in the step S102, determining whether or not the contents of the event satisfies the registration conditions. In the affirmative case, the system proceeds to the step S104, reverting to the step S101 in the negative case.

In the step S104, the system determines whether or not a pertinent work condition change has already been registered, reverting to the step 101 in the affirmative case while proceeding to the step S105 in the negative case.

In the step S105, the system changes work conditions registered in the work management database 12 according to the contents of the file in "registration conditions". In this case, the work conditions are reflected in the files, and so forth, in "work-state list" {Fig. 1 (B)}.

In the step S106, the system determines whether or not the registration conditions acquired in the step S102 have been met, and proceeds to the step S107 in the affirmative case while reverting to the step S101 in the negative case.

In the step S107, the system notifies the operator in charge, registered in the work management database 12, that the work conditions have been changed, thereby reverting to the step S101.

In Fig. 7, steps S111 to S117 make up a flow chart showing a procedure of the processing for the work condition change upon occurrence of process variation (the step S11)

In the step S111 of Fig. 7, the system reads process data from the distributed control system 2, or other systems.

Next, in the step S112, the system reads a file in "registration conditions" {Fig. 1 (B)} in the work management database 12, acquiring necessary information.

Next, in the step S113, the system compares the process data acquired in the step S111 with the registration conditions acquired in the step S112, determining whether or not the process data satisfies the registration conditions. In the affirmative case, the system proceeds to the step S114, reverting to the step S11 in the negative case.

In the step S114, the system determines whether or not a pertinent work condition change has already been registered, reverting to the step S111 in the affirmative case while proceeding to the step S115 in the negative case.

In the step S115, the system changes work conditions registered in the work management database 12 according to the contents of the file in "registration conditions". In this case, the work conditions are reflected in the files, and so forth, in "work-state list" {Fig. 1 (B)}.

In the step S116, the system determines whether or not the registration conditions acquired in the step S112 have been met, and proceeds to the step S117 in the affirmative case while reverting to the step S111 in the negative case.

In the step S117, the system notifies the operator in charge, registered in the work management database 12, that the work conditions have been changed, thereby reverting to the step S111.

With the production operation management system according to the present embodiment, because a series of jobs are computerized in the form of a common job order, as described in the foregoing, the following advantages are gained:
- As the job order is computerized, storage and retrieval are implemented with ease:

- With job setting based on the job order, an error can be eliminated;
- An error in instructions given to a worker in charge of a job can be prevented;
- Time required for collection of information necessary for a job, and for retrieval thereof can be shortened;
- A job can be executed with accuracy, and in shorter time;
- It is possible to monitor a progress state of jobs under way on the basis of a series of jobs as a unit;
- No omission occurs to notification on work completion;
- It is possible to manage data, and job logs on the basis of a series of jobs as a unit;
- As most of information for the handover process can be computerized, it is possible to efficiently implement preparation for succession, and jobs to be succeeded.

Further, with the production operation management system according to the present embodiment, necessary information is exchanged between the work management server 11, and the distributed control system 2 at the appropriate times.

More specifically, thanks to the function of the work management server 11, it will be possible to issue a call to instruments (face plate) of the plant 21, to write data to the instruments, to read data from the instruments, and to issue a call to a trend screen, a control loop screen, and a graphic screen, respectively, associated with work, as necessary, via the terminal device 13. Those screens each are identical to a screen for use in the distributed control system 2, accepting the same operation as in the case of the distributed control system 2. Such operation is reflected in the distributed control system 2. Further, it is also possible to issue a call to other applications attached to the distributed control system 2.

Accordingly, at the time of the work execution by the operator in charge (the step S5), it will be possible to execute production operation while monitoring a state of the plant 21 directly from the terminal device 13. Further, it will also be possible to directly check a state of the plant 21 via the distributed control system 2 upon the work-state reporting (the step S7).

For example, in the case of crude oil that is a raw material for a crude oil distillation unit in the upstream process of petroleum refining, there occurs a job for tank switching at a rate of once for every 3 to 4 days.

The tank switching can be broadly divided into three jobs as follows:
(1) a valve-switching job in the field in a tank yard
(2) a job for switching from a monitoring station in a central control room
(3) a post-switching job for quality test on constituents distilled from the distillation system upon stabilization

Those jobs are carried out under circumstances where a difference exists in respect of location, and time, so that jobs such as a job for liaising with respective divisions as to a start of the job, and so forth, have been required.

In contrast, with the production operation management system according to the present embodiment, work to be executed mainly through the intermediary of the distributed control system, classified under item (2) as above, can be operated from the terminal device 13. It is possible to carry out a series of jobs for this purpose via the terminal device 13, including a job to check a state of the job classified under item (1) as above, and a job to advise other divisions of a start time of the job under item (2) as above, issuing a call to instruments and screens, respectively, over the distributed control system, monitoring, and operation at the time of switching being required of the instruments and the screens, thereby setting data against the instruments.

In this case, after a progress state of the job classified under item (1) as above is checked by the production operation management system 1, the job under item (2) as above can be started, so that the start of the job is automatically notified to the concerned personnel.

Further, the call to the instruments and the screens, respectively, over the distributed control system, necessary for work, or the setting of data against the instruments can be executed by use of the production operation management system 1. Accordingly, plant operation can be speedily executed with the use of the distributed control system without carrying out operations (calls to respective screens, and data setting, by key-inputting) relying on an operator's knowledge as practiced in the past. Furthermore, erroneous operations can be prevented. In addition, since completion of the jobs over the distributed control system is automatically notified through the intermediary of the production operation management system 1 to a job-worker who executes the job classified under item (3) as above, time loss can be eliminated.

With the embedment described in the foregoing, there has been shown an example wherein the work management server 11 is provided with a function of information processing means, however, other devices such as the terminal device 13, and so forth may be provided with a part of, or the whole of the function of the information processing means.

Further, with the embedment described in the foregoing, there has been shown an example wherein the work management server 11 is provided with functions of the registration-acceptance means, the progress-state acceptance means, the progress-state storage means, the presentation-request acceptance means, and the progress-state presentation means, respectively, however, other devices such as the terminal device 13, and so forth may be provided with a part of, or the whole of each of those functions described.

It is to be understood that an application range of the present invention be not limited to the embedment described in the foregoing. The present invention is widely applicable to a production operation management system for managing production operation at a plant.

## Claims

1. A production operation management system (1) for managing production operation at a plant, said system comprising:
registration-acceptance means for accepting registration of jobs necessary for the production operation,
progress-state acceptance means for accepting an input of a progress-state of each of the jobs, the registration thereof being accepted by the registration-acceptance means,
progress-state storage means for storing a progress-state of each of the jobs, inputted by the progress-state acceptance means,
presentation-request acceptance means for accepting a presentation-request for a progress-state of each of the jobs, stored by the progress-state storage means,
progress-state presentation means for presenting the progress-state of each of the jobs, stored by the progress-state storage means, according to the presentation-request accepted by the presentation-request acceptance means, and
information processing means for executing exchange of information with a distributed control system (2) for controlling respective sections of the plant (21) according to the progress-state.

2. The production operation management system according claim 1, wherein the information processing means acquires information held by the distributed control system (2) so as to be displayed.

3. The production operation management system according claim 1 to 2, wherein the information processing means writes data to the distributed control system (2).

4. The production operation management system according to any one of claims 1 to 3, wherein the information processing means causes results of the exchange of information with the distributed control system (2) to be reflected on the progress-state.

5. The production operation management system according to any one of claims 1 to 4 further comprising screen-call means for issuing a call to a screen that is used in the distributed control system (2), and accepting an operation to the distributed control system (2), necessary for the jobs, via the screen:
